# EUROPEAN PATENT SPECIFICATION

(11) **EP 2 790 333 B1**
(45) Date of publication and mention of the grant of the patent: **23.11.2016**
(21) Application number: 14163287.7
(22) Date of filing: 03.04.2014
(51) Int. Cl.: H04B 7/26, H04W 84/18

(54) **Wirelss communication system**
Drahtloses Kommunikationssystem
Système de communication sans fil

(30) Priority: 10.04.2013 JP 2013082153
(43) Date of publication of application: 15.10.2014
(73) Proprietor: Panasonic Intellectual Property Management Co., Ltd., Osaka 540-6207 (JP)
(72) Inventor: Kurita, Masanori, Chuo-ku, Osaka 540-6207 (JP); Hoshiba, Keitaro, Chuo-ku, Osaka 540-6207 (JP)
(74) Representative: Appelt, Christian W.

(56) References cited:
- EP-A1- 2 034 628
- JP-A- 2006 343 979
- US-A1- 2011 243 011

## Description

### Technical Field

The present invention relates to wireless communication systems and particularly to a wireless communication system including two or more subsystems each constituted by a master and two or more slaves.

### Background Art

Document 1 (JP 2006-343979 A) discloses a prior wireless communication system used in a fire alarm system to enable transmission of a wireless signal indicative of fire sense information from a fire sensor to a central monitor by way of a relay.

Document 1 discloses that to avoid interference between wireless signals from fire sensors a time division multiple access (TDMA) scheme is used for wireless communication between fire sensors and relays.

In some cases, relays (masters) are unfortunately installed such that one of the relays can receive radio waves from the other relays, and sending periods of synchronization signals from the relays overlap each other. In these cases, the fire sensors (slaves) may fail to receive the synchronization signals and thus it may be difficult to establish meaningful wireless communication.

### Summary of Invention

In view of the above insufficiency, the present invention has aimed to enable successful wireless communication between masters and slaves irrespective of locations of masters.

The wireless communication system of the first aspect in accordance with the present invention includes two or more subsystems. Each of the two or more subsystems includes a master and two or more slaves. The master is configured to define a super frame for wireless communication in conformity with a time division multiple access scheme. The super frame includes three or more frames including one head frame and two or more subsequent frames. Each of the three or more frames includes three or more time slots including one first time slot allocated to the master, and two or more second time slots individually allocated to the two or more slaves. The master is configured to send a wireless signal at the first time slot and to wait for a wireless signal at the two or more second time slots. Each of the two or more slaves is configured to send a wireless signal at an allocated second time slot of the two or more second time slots. The master is configured to send a synchronization signal at the first time slot of the head frame. Each of the two or more slaves is configured to, when receiving the synchronization signal, send a response signal at the allocated second time slot of the head frame. The master is configured to, when failing to receive the response signal from at least one of the two or more slaves, perform a change process to change the super frame from a current super frame to a new super frame. The master is configured to, in the change process, define the new super frame such that the head frame of the new super frame is synchronized with a reference frame selected from the two or more subsequent frames of the current super frame.

According to the wireless communication system of the second aspect in accordance with the present invention, in addition to the first aspect, the master includes a master wireless sender configured to send a wireless signal, a master wireless receiver configured to receive a wireless signal, and a master controller configured to control the master wireless sender and the master wireless receiver. The master controller is configured to control the master wireless sender to send a wireless signal at the first time slot. The master controller is configured to control the master wireless receiver to wait for a wireless signal at each of the two or more second time slots. Each of the two or more slaves includes a slave wireless sender configured to send a wireless signal, a slave wireless receiver configured to receive a wireless signal, and a slave controller configured to control the slave wireless sender and the slave wireless receiver. The slave controller is configured to control the slave wireless receiver to wait for a wireless signal at the first time slot. The slave controller is configured to control the slave wireless sender to send a wireless signal at the allocated second time slot.

According to the wireless communication system of the third aspect in accordance with the present invention, in addition to the first or second aspect, the master is configured to, when failing to receive the response signal from at least one of the two or more slaves, perform the change process after performing a notification process. The master is configured to, in the notification process, send a notification signal at the first time slot of the head frame of the current super frame. The notification signal indicates the reference frame.

According to the wireless communication system of the fourth aspect in accordance with the present invention, in addition to any one of the first to third aspects, the reference frame is predetermined.

According to the wireless communication system of the fifth aspect in accordance with the present invention, in addition to the fourth aspect, the master is configured to determine the reference frame randomly.

According to the wireless communication system of the sixth aspect in accordance with the present invention, in addition to any one of the first to third aspects, the master is configured to select the reference frame such that the two or more subsystems have different reference frames.

According to the wireless communication system of the seventh aspect in accordance with the present invention, in addition to the sixth aspect, the master has a peculiar identification code. The master is configured to select the reference frame based on the peculiar identification code.

According to the wireless communication system of the eighth aspect in accordance with the present invention, in addition to any one of the first to third aspects, the master is configured to: in the change process, measure a radio field intensity for each of the two or more subsequent frames of the current super frame; and select, as the reference frame, a subsequent frame in which the radio field intensity is not greater than a predetermined threshold, or a subsequent frame in which a maximum of the radio field intensity is the smallest.

According to the wireless communication system of the ninth aspect in accordance with the present invention, in addition to any one of the first to eighth aspects, the three or more time slots have the same length. The master is configured to: in the change process, measure a radio field intensity for each of the two or more subsequent frames of the current super frame; and exclude, from candidates for the reference frame, a subsequent frame in which a period in which the radio field intensity is greater than a predetermined threshold reaches a predetermined continuous period having a length not greater than the length of the time slot.

According to the wireless communication system of the tenth aspect in accordance with the present invention, in addition to any one of the first to ninth aspects, each of the two or more subsystems is configured to perform wireless communication by use of any one of two or more frequency channels. The master is configured to; in the change process, measure a radio field intensity for each of the two or more subsequent frames of the current super frame on an in-use frequency channel of the two or more frequency channels; measure radio field intensities on remaining frequency channels of the two or more frequency channels for a subsequent frame in which the radio field intensity on the in-use frequency channel is greater than a predetermined first threshold; and when at least one of the radio field intensities on the remaining frequency channels is greater than a predetermined second threshold, exclude, from candidates for the reference frame, a subsequent frame in which the radio field intensity on the in-use frequency channel is greater than the first threshold.

According to the wireless communication system of the eleventh aspect in accordance with the present invention, in addition to any one of the first to tenth aspects, the two or more subsystems are configured to perform wireless communication by use of two or more different frequency channels. The master is configured to: in the change process, measure a radio field intensity for each of the two or more subsequent frames of the current super frame on an in-use frequency channel of the two or more frequency channels; measure radio field intensities on remaining frequency channels of the two or more frequency channels for a subsequent frame in which the radio field intensity on the in-use frequency channel is greater than a predetermined third threshold; when at least one of the radio field intensities on the remaining frequency channels is greater than a predetermined fourth threshold, determine whether a cause of making the radio field intensities greater than the predetermined fourth threshold is a wireless signal of any one of the two or more subsystems; and when the cause is a wireless signal of any one of the two or more subsystems, exclude, from candidates for the reference frame, a subsequent frame in which the radio field intensity on the in-use frequency channel is greater than the third threshold.

According to the wireless communication system of the twelfth aspect in accordance with the present invention, in addition to the first or second aspect, the master is configured to: perform measurement of a radio field intensity for each of the two or more subsequent frames of the current super frame; determine the reference frame based on the measured radio field intensities; and send a wireless signal indicative of the determined reference frame to the two or more slaves.

According to the wireless communication system of the thirteenth aspect in accordance with the present invention, in addition to the twelfth aspect, the master is configured to: perform the measurement of the radio field intensity for each of the two or more subsequent frames of the current super frame two or more times; and determine the reference frame based on results of the two or more measurements.

According to the wireless communication system of the fourteenth aspect in accordance with the present invention, in addition to any one of the first to thirteenth aspect, the master is configured to exclude, from candidates for the reference frame, a subsequent frame which is one of the two or more subsequent frames of the current super frame and is adjacent to the head frame of the current super frame.

### Brief Description of the Drawings

**FIG. 1** is a configuration diagram illustrating the wireless communication system of the first embodiment;
**FIG. 2** is a block diagram illustrating the slave (fire sensor) of the wireless communication system of the first embodiment;
**FIG. 3** is a block diagram illustrating the master (relay) of the wireless communication system of the first embodiment;
**FIG. 4** is a block diagram illustrating the central monitor of the wireless communication system of the first embodiment;
**FIG. 5** is an explanatory diagram illustrating the frame format used in the wireless communication system of the first embodiment;
**FIG. 6** is an explanatory diagram illustrating the super frame used in the wireless communication system of the first embodiment;
**FIG. 7** is an explanatory diagram illustrating the operation of the wireless communication system of the first embodiment;
**FIG. 8** is a block diagram illustrating the slave (fire sensor) of the wireless communication system of the third embodiment;
**FIG. 9** is a block diagram illustrating the master (relay) of the wireless communication system of the third embodiment; and

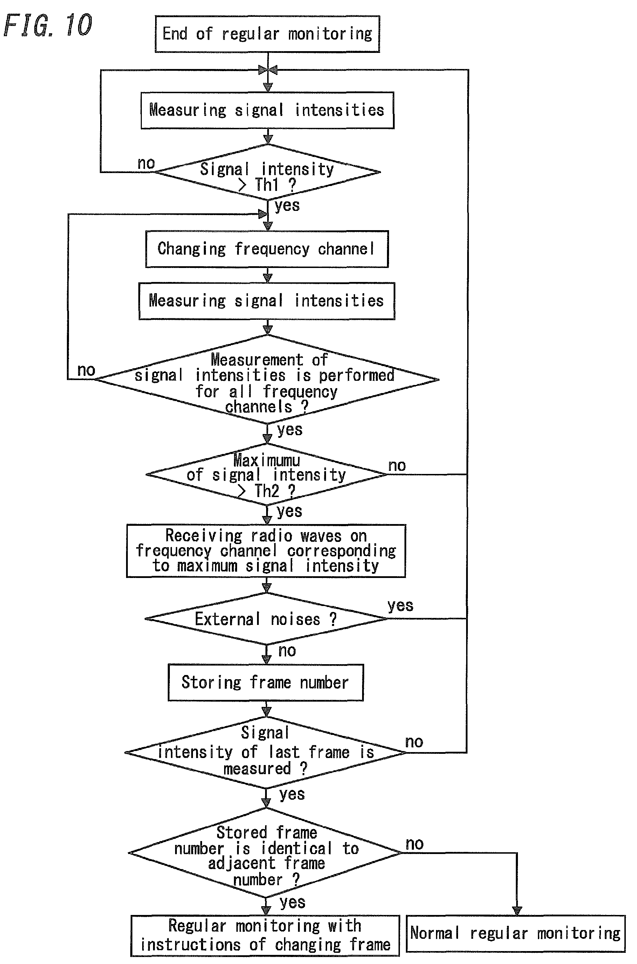

**FIG. 10** is a flow chart illustrating the operation of the relay controller of the wireless communication system of the third embodiment.

### Description of Embodiments

Hereinafter, embodiments of fire alarm systems in conformity with the present invention are described with reference to the drawings.

### (FIRST EMBODIMENT)

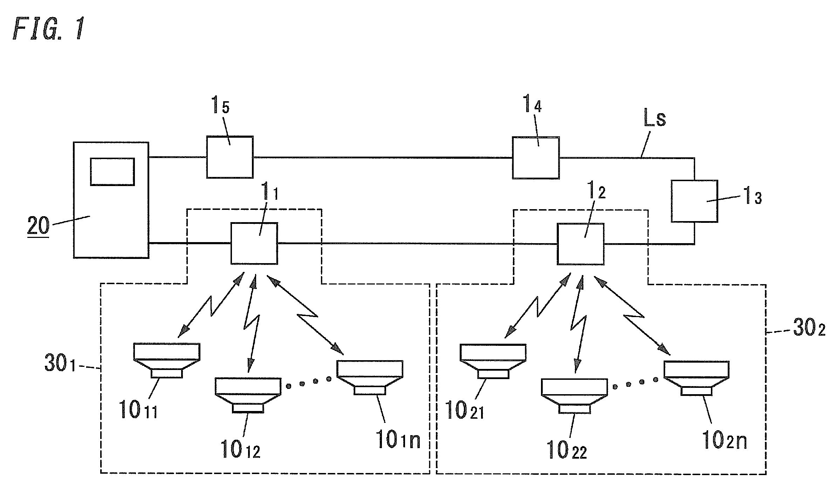

As shown in **FIG. 1****,** the wireless communication system (fire alarm system) of the present embodiment includes one central monitor **20,** a plurality of (five, in the illustrated example) relays **1 (1₁** to **1₅),** and a plurality of fire sensors **10.**

Note that, **FIG. 1** shows the six fire sensors **10 (10₁₁** to **10₁ₙ** and **10₂₁** to **10₂ₙ)** only.

In the present embodiment, the relay **1** serves as a master, and the fire sensor **10** serves as a slave. The slave is not limited to the fire sensor **10,** and may be sensors such as sensors for sensing gas leakage and sensors for sensing intrusion of persons into monitored areas, for example.

The relays **1₁** to **1₅** are connected to the central monitor **20** via a signal line **Ls** (in a multi-drop topology). Data transmission between the relays **1₁** to **1₅** and the central monitor **20** is performed via the signal line **Ls.**

The relay **1ᵢ (i** = **1**, **2**, ..., **5**) constitutes a subsystem **30ᵢ** together with a plurality of (two or more) fire sensors **10ᵢₘ** (m= **1, 2, ..., n).** The relay **1ᵢ** performs wireless communication with the fire sensors **10ᵢₘ** belonging to the subsystem including the relay **1ᵢ,** by use of a radio wave serving as a medium.

For example, fire sensing information sent from the fire sensor **10ᵢₘ** is transmitted from the relay **1ᵢ** to the central monitor **20** through the signal line **Ls.** Thus, necessary procedures (e.g., sounding alarming sounds, announcing locations of fires, and notifying fire departments) are performed under control of the central monitor **20.**

**FIG. 1** does not show the fire sensors **10** belonging to the subsystems **30₃** to **30₅** respectively including the relays **1₃** to **1₅.** The number of relays **1ᵢ** is only an example, and is not limited to five.

As described above, the wireless communication system of the present embodiment includes a plurality of (two or more) subsystems **30ᵢ.** Each of the plurality of (two or more) subsystems **30ᵢ** includes one master (relay) **1ᵢ** and a plurality of (two or more) slaves (fire sensors) **10ᵢₘ.**

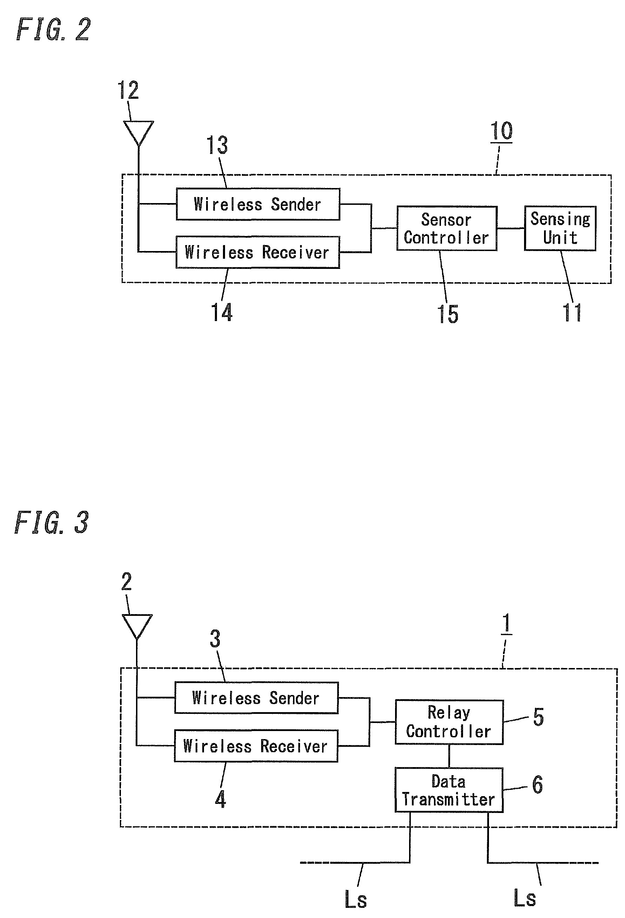

The fire sensor **10** is to be installed on a ceiling of premises. As shown in **FIG. 2****,** the fire sensor **10** includes a sensing unit **11,** an antenna **12,** a wireless sender (slave wireless sender) **13,** a wireless receiver (slave wireless receiver) **14,** and a sensor controller (slave controller) **15,** for example.

The sensing unit **11** is configured to sense a fire by detecting smoke accompanying with such a fire, for example.

The wireless sender **13** is configured to modulate a carrier having a prescribed frequency with transmission data and send a resultant modulated signal as a wireless signal through radio waves as mediums from the antenna **12.**

The wireless receiver **14** is configured to demodulate the wireless signal received at the antenna **12** to obtain the transmission data therefrom and output the transmission data to the sensor controller **15.**

The sensor controller **15** mainly includes a microcomputer and a non-volatile memory such as EEPROM. The sensor controller **15** executes programs stored in the non-volatile memory to perform various kinds of processing described below.

As shown in **FIG. 3****,** the relay **1** includes, an antenna **2,** a wireless sender (master wireless sender) **3,** a wireless receiver (master wireless receiver) **4,** a relay controller (master controller) **5,** and a data transmitter **6,** for example.

The wireless sender **3** is configured to modulate a carrier having a prescribed frequency with transmission data and send a resultant modulated signal as a wireless signal through radio waves as mediums from the antenna **2.**

The wireless receiver **4** is configured to demodulate the wireless signal received at the antenna **2** to obtain the transmission data therefrom and output the transmission data to the relay controller **5.**

The data transmitter **6** is configured to send a transmission signal to the central monitor **20** via the signal line **Ls** and to receive a transmission signal from the central monitor **20** via the signal line **Ls.** The transmission signal is prepared by performing pulse width modulation on a DC voltage with polarities applied between lines of the signal line **Ls.**

The relay controller **5** mainly includes a microcomputer and a non-volatile memory such as EEPROM. The relay controller **5** executes programs stored in the non-volatile memory to perform various kinds of processing described below.

Identification codes are allocated to the relays **1** and the fire sensors **10.** The identification code is used to identify a sender and a destination of a wireless signal. The identification code is constituted by at least one of a system code and a sensor number. The system codes are used to identify the subsystems. The sensor numbers are used to distinguish the fire sensors (fire alarms) **10** belonging to the same subsystem from each other. For example, the identification code allocated to the relay **1** is the system code, and the identification code allocated to the fire sensor **10** is a combination of the system code and the sensor number.

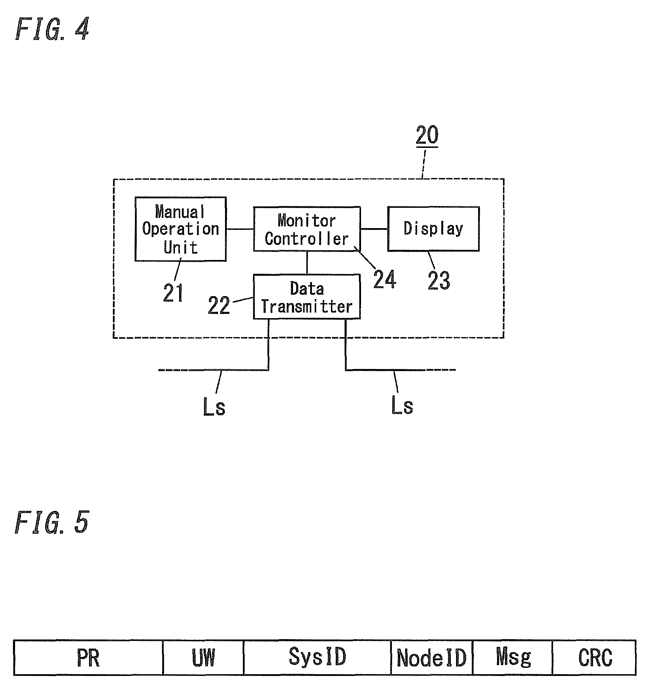

The central monitor **20** is installed in rooms of premises such as management rooms. As shown in **FIG. 4****,** the central monitor **20** includes a manual operation unit **21,** a data transmitter **22,** a display **23,** and a monitor controller **24,** for example.

The manual operation unit **21** is configured to monitor operational states of various switches, and output operation signals to the monitor controller **24** in response to manual operations of the switches.

The data transmitter **22** is configured to send the aforementioned transmission signal to the data transmitter **6** of the relay **1** via the signal line **Ls** and to receive the aforementioned transmission signal from the data transmitter **6** of the relay **1** via the signal line **Ls.**

The display **23** includes a display device (e.g., a liquid crystal display and an organic EL display) and a driver configured to operate the display device in accordance with instructions from the monitor controller **24,** for example.

The monitor controller **24** mainly includes a microcomputer and a non-volatile memory such as EEPROM. The monitor controller **24** executes programs stored in the non-volatile memory to perform various kinds of processing described below.

**FIG. 5** shows a frame format of a frame (frame defining a content of a wireless signal) transmitted between the relay **1** and the fire sensors **10.** This frame format includes a preamble **PR,** a unique word **UW,** a system code **SysID,** a sensor number **NodeID**, a message **Msg,** and an error detection code **CRC.**

The preamble **PR** is a series of 32 bits in which "1" and "0" are present alternately, for example. The preamble **PR** is used to achieve bit synchronization of wireless signals received by the wireless receivers **4** and **14.** The unique word **UW** is used by the wireless receivers **4** and **14** to achieve frame synchronization.

To send a message from the relay **1** to a particular fire sensor **10** of the subsystem **30,** the relay controller **5** stores the sensor number of the particular fire sensor **10** in an area reserved for the sensor number **NodeID.**

To simultaneously send (broadcast or multicast) a message from the relay 1 to all the fire sensors **10** of the subsystem **30,** the relay controller **5** stores a specific number in the area reserved for the sensor number **NodeID.** The specific number is not allocated to any fire sensor **10.** For example, the specific number is "00".

To send a wireless signal from the fire sensor **10** to the relay **1,** the sensor controller **15** stores the allocated sensor number in the area reserved for the sensor number **NodeID.**

When the fire sensor **10** receives a wireless signal, the wireless receiver **14** amplifies and demodulates the received wireless signal and then outputs the resultant signal to the sensor controller **15.** Likewise, when the relay **1** receives a wireless signal, the wireless receiver **4** amplifies and demodulates the received wireless signal and then outputs the resultant signal to the relay controller **5.**

The sensor controller **15** receives data obtained by demodulation by the wireless receiver **14** at a digital input port of its microcomputer to sample the same data. Likewise, the relay controller **5** receives data extracted by demodulation by the wireless receiver **4** at a digital input port of its microcomputer to sample the same data.

Each of the sensor controller **15** and the relay controller **5** achieves the bit synchronization by use of the preamble **PR** and then achieves the frame synchronization by use of the unique word **UW,** to extract data (identification code) stored in the system code **SysID** and data (identification code) stored in the sensor number **NodeID.**

Each of the sensor controller **15** and the relay controller **5** discards the data extracted by the demodulation when the acquired identification code is not identical to the allocated identification code. Each of the sensor controller **15** and the relay controller **5** extracts data (message) stored in an area reserved for the message **Msg** when the acquired identification code is identical to the allocated identification code and a bit error is not detected.

Each of the sensor controller **15** and the relay controller **5** does not discard the data extracted by the demodulation but extracts the data (message) stored in the area reserved for the message **Msg** also when the acquired identification code is identical to a broadcast code or a multicast code.

Each of the subsystems **30ᵢ** performs wireless communication between the single relay **1ᵢ** and a plurality of fire sensors **10ᵢ₁** to **10ᵢₙ** in the time division multiple access (TDMA) scheme.

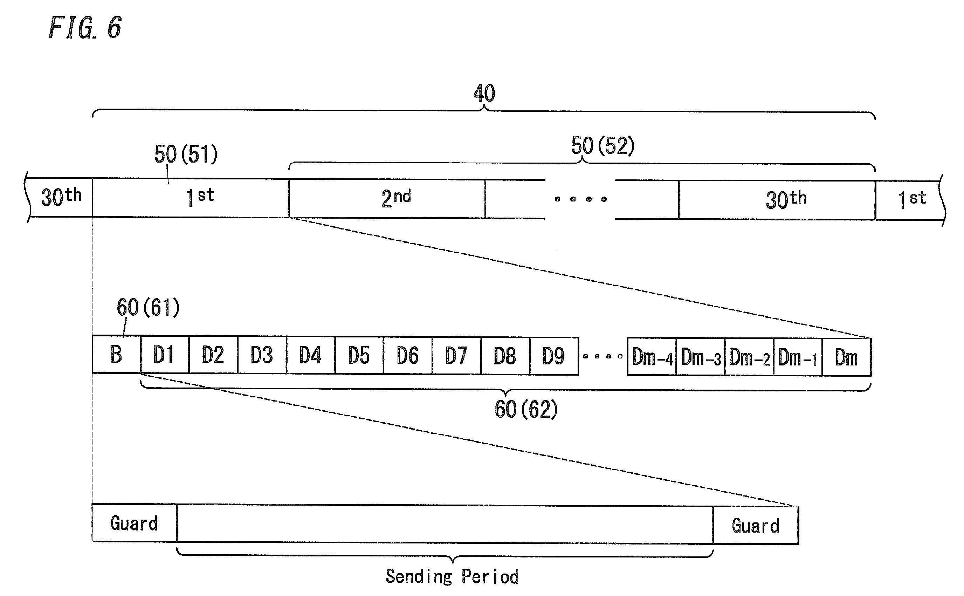

In the present embodiment, as shown in **FIG. 6****,** a single frame (subframe) **50** is constituted by a single downlink time slot **B** (first time slot **61**) reserved for a downlink (the relay **1**ᵢ to the fire sensors **10ᵢₘ**) and a plurality of (two or more) uplink time slots **D₁** to **Dₘ** (second time slots **62**) reserved for an uplink (the fire sensors **10ᵢₘ** to the relay **1ᵢ**).

The uplink time slots **D₁** to **Dₘ** in the frame **50** are allocated to the fire sensors **10ᵢₘ** individually. It is therefore possible to successfully avoid interference between wireless signals sent from the fire sensors **10ᵢₘ.**

Each subsystem **30** is required to regularly check whether the fire sensors **10** operate normally. To achieve this purpose, the relay **1** performs an operation of regularly sending (sending simultaneously) a sending request message to the fire sensors **10** in order to receive a response message (response signal) from each fire sensor **10.** This operation is hereinafter referred to as regular monitoring.

When failing to receive the response message at some uplink time slot (second time slot) **62,** the relay **1** determines that abnormality (e.g., flat battery) has occurred in the fire sensor **10** associated with this time slot **62.**

The sensor controller **15** of each fire sensor **10** controls its timer based on the timing of receiving the sending request message to determine the timing of the time slot **62.** In other words, the wireless signal including the sending request message is used as a synchronization signal (beacon) to define the time slot **62** in conformity with the TDMA scheme. Hence, in the following description, the wireless signal including the sending request message is referred to as a synchronization signal.

**FIG. 6** shows a super frame **40** that is constituted by the 1^{st} frame (frame **51**) and the 2^{nd}, 3^{rd}, ..., and 30^{th} frames (a plurality of frames **52**) following the 1^{st} frame. The 1^{st} frame is used for sending the synchronization signal. The second and following frames (i.e., the 2^{nd}, ..., and 30^{th} frames) **52** are used for sending messages other than the sending request message.

For example, allocation of uplink time slots **D₁** to **Dₘ** (second time slots **62**) to the fire sensors **10** can be determined by use of dip switches provided to the fire sensors **10.** Alternatively, in a manufacture process, information of such allocation may be stored on the non-volatile memory of the sensor controller **15.** Alternatively, in a process of installation, the relay **1** may send such allocation information to the fire sensors **10** in series via wireless communication to store the allocation information in the non-volatile memory of the sensor controller **15.**

In the present embodiment, each super frame **40** is constituted by the thirty frames **50.** The number of frames **50** constituting the super frame **40** is not limited to **30.**

As described above, the master (relay) 1 of each of the plurality of (two or more) subsystems **30** is configured to define the super frame **40** for wireless communication in conformity with the time division multiple access scheme. The super frame **40** includes a plurality of (three or more) frames (subframes) **50** including one head frame **51** and a plurality of (two or more) subsequent frames **52.** Each of the plurality of (three or more) frames (subframes) **50** includes a plurality of (three or more) time slots **60** including one first time slot **61** allocated to the master **1,** and a plurality of (two or more) second time slots **62** individually allocated to the plurality of (two or more) slaves **10.** For example, the plurality of time slots **60** have the same length.

The master **1** is configured to send a wireless signal at the first time slot **61** and to wait for a wireless signal at the plurality of (two or more) second time slots **62.** In the present embodiment, the master controller **5** is configured to control the master wireless sender **3** to send a wireless signal at the first time slot **61.** The master controller **5** is configured to control the master wireless receiver **4** to wait for a wireless signal at each of the plurality of (two or more) second time slots **62.**

Each of the plurality of (two or more) slaves **10** is configured to wait for a wireless signal at the first time slot **60 (61)** and to send a wireless signal at an allocated second time slot **62** of the plurality of (two or more) second time slots **60 (62).** In the present embodiment, the slave controller **15** is configured to control the slave wireless receiver **14** to wait for a wireless signal at the first time slot **61.** The slave controller **15** is configured to control the slave wireless sender **13** to send a wireless signal at the allocated second time slot **62.**

Further, to perform the regular monitoring, the master **1** is configured to send the synchronization signal at the first time slot **61** of the head frame **51.** Each of the plurality of (two or more) slaves **10** is configured to, when receiving the synchronization signal, send the response signal (response message) at the allocated second time slot **62** of the head frame **51.**

Next, the operation of the present embodiment is described. The first description is made to the operation of the system when some fire sensor **10** (e.g., the fire sensor **10₁₁)** has detected a fire.

When receiving a fire sensing signal from the sensing unit **11,** the sensor controller **15** of the fire sensor **10₁₁** generates a send frame that stores the fire sensing information (fire sensing message) in the area reserved for the message **Msg.** Further, the sensor controller **15** controls the wireless sender **13** to send a wireless signal including the send frame at the allocated uplink time slot **D1**.

The wireless receiver **4** of the relay **1₁** receives the wireless signal sent from the fire sensor **10₁₁,** and gives, to the relay controller **5,** a reception frame extracted from the demodulated wireless signal. When receiving the reception frame from the wireless receiver **4,** the relay controller **5** controls the data transmitter **6** to transmit a transmission signal including the identification code (combination of the system code and the sensor number) of the fire sensor **10₁₁** as the sender of this reception frame and the fire sensing message to the central monitor **20** through the signal line **Ls.**

The data transmitter **22** of the central monitor **20** receives the transmission signal sent from the relay **1₁,** and gives the identification code and the fire sensing message extracted from the transmission signal to the monitor controller **24.** The monitor controller **24** identifies a site of fire occurrence (location of the fire sensor **10₁₁** that has detected the fire) with reference to the received identification code, and then controls the display **23** to display the identified site of fire occurrence.

In some cases, incidentally, communication areas (area in which the wireless receiver **4** and the wireless receiver **14** can receive wireless signals) of the plurality of subsystems **30** may overlap with each other, and timings of the head frames (1^{st} frames) of the plurality of subsystems **30** may coincide with each other. In such cases, when a distance between the fire sensor **10** and the relay **1** belonging to different subsystems **30** is shorter than a distance between the fire sensor **10** and the relay **1** belonging to the same subsystems **30,** wireless communication between the fire sensor **10** and the relay **1** belonging to the same subsystems **30** may be impossible.

When failing to receive the response message at some uplink time slot **62,** the relay controller 5 determines that wireless communication with the fire sensor **10** associated with the uplink time slot **62** in which the relay controller **5** has failed to receive the response message may be impossible.

When determining that the wireless communication may be impossible, the relay controller **5** changes the frame (synchronization frame) for carrying the synchronization signal, from the head frame (1^{st} frame) to another frame (e.g., the 12^{th} frame).

In other words, the relay controller **5** sends the synchronization signal at the 12^{th} frame, and treats the designated frame (12^{th} frame) as the head frame (1^{st} frame) of each of the subsequent and later super frames **40.**

In short, the subsequent and later super frames **40** can be expressed by use of the 1^{st} to 30^{th} frames constituting the current super frame **40** as follows. The thirty frames constituting each of the subsequent and later super frames **40** is a series of the 1^{th} to 30^{th} and 1^{st} to 11^{th} frames.

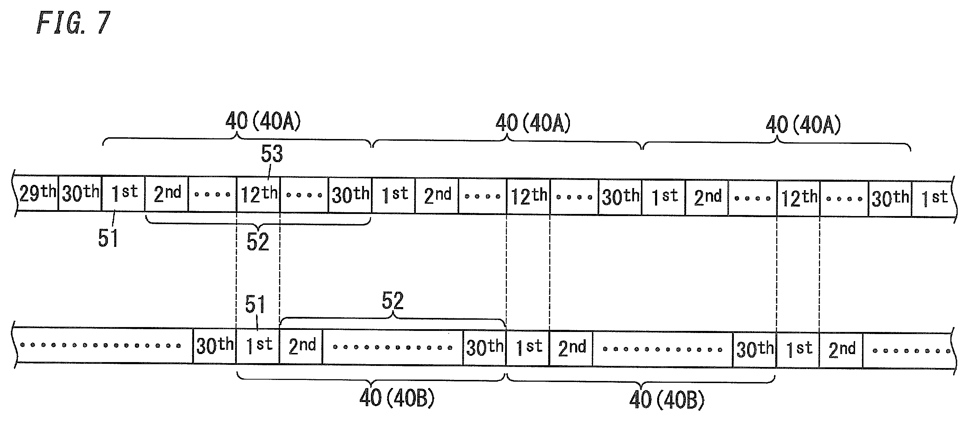

In the wireless communication system of the present embodiment, as shown in **FIG. 7****,** when failing to receive the response signal from at least one of the plurality of (two or more) slaves (fire sensors) **10,** the master (relay) **1** performs a change process to change the super frame **40** from a current super frame **40A** to a new super frame **40B.**

In the change process, the master **1** defines the new super frame **40B** such that the head frame **51** of the new super frame **40B** is synchronized with (coincide with) a reference frame **53.** The reference frame **53** is a frame **50** to determine a starting point of the new super frame **40B.** The reference frame **53** is selected from the plurality of (two or more) subsequent frames **52** of the current super frame **40A.**

In other words, the position of the head frame **51** of the new super frame **40B** is identical to the position of the reference frame (designated frame) **53** selected from the plurality of subsequent frames **52** of the current super frame **40A.** In other words, it is considered that the new super frame **40B** is delayed from the current super frame **40A** by a time difference between the head frame **51** and the reference frame **53** of the current super frame **40A.**

The new super frame **40B** and the current super frame **40A** have the same format. In summary, the new super frame **40B** and the current super frame **40A** are the same in the number of frames **50,** and each have the head frame **51** and the plurality of subsequent frames **52.**

In the subsystem **30** including the master 1 that has performed the change process, the wireless communication according to the TDMA scheme is performed in accordance with the new super frame **40B.**

When wireless communication between the relay **1** and the fire sensor **10** belonging to the same subsystem is impossible, the relay controller **5** changes the frame reserved for sending the synchronization signal, from the head frame (1^{st} frame) to another frame (12^{th} frame).

When the abnormality (e.g., a flat battery) does not occur, each fire sensor **10** can receive the synchronization signal at the downlink time slot **B** of the changed frame and return the response message.

When failure in communication with the fire sensor **10** is caused by interference with the adjacent subsystem **30,** change of the frame reserved for sending the synchronization signal can avoid such interference, and enable the wireless communication between the relay **1** and the fire sensors **10.**

When failure in communication with the fire sensor **10** is caused by the abnormality such as a flat battery, the wireless communication between the relay **1** and the fire sensors **10** cannot be recovered by change of the frame reserved for sending the synchronization signal. Hence, the relay controller **5** can determine that the abnormality such as a flat battery has occurred in the fire sensor **10.**

In brief, when failing to receive the response signal from the slave (fire sensor) **10** after performing the change process, the master (relay) 1 determines that the abnormality has occurred in this slave **10.**

As described above, the wireless communication system of the present embodiment includes the plurality of subsystems **30** each including the single master (relay) **1** and the plurality of slaves (fire sensors) **10** configured to perform wireless communication with the master **1** in accordance with the time division multiple access scheme. The slave **10** includes: the wireless sender **13** configured to send a wireless signal; the wireless receiver **14** configured to receive a wireless signal; and the slave controller (sensor controller) **15** configured to control the wireless sender **13** and the wireless receiver **14.** The master **1** includes: the wireless sender **3** configured to send a wireless signal; the wireless receiver **4** configured to receive a wireless signal; and the master controller (relay controller) **5** configured to control the wireless sender **3** and the wireless receiver **4.** The wireless signals are sent and received between the master **1** and the slave **10** in each subsystem **30** by use of the super frame **40** constituted by the constant number of frames **50** each including the plurality of time slots **60** synchronized with the synchronization signal sent from the wireless sender **3** of the relay **1.** The time slots **60** include the single downlink time slot **61** for transmission from the master **1** to the slaves **10,** and the plurality of uplink time slots **62** individually allocated to the slaves **10** for transmission from the slave **10** to the master **1.** The relay controller **5** is configured to cause the wireless sender **3** to send the synchronization signal at the downlink time slot **61** in the head frame **51** of the super frame **40,** and is configured to allow the wireless receiver **4** to receive a wireless signal at each uplink time slot **62** in all the frames **51** constituting the super frame **40.** The sensor controller **15** is configured to, when receiving the synchronization signal via the wireless receiver **14,** cause the wireless sender **13** to send a response wireless signal (response signal) at the allocated uplink time slot **62.** The relay controller **5** is configured to allow the wireless receiver **4** to receive the response wireless signal sent at the uplink time slot **62** in the head frame **51.** The relay controller **5** is configured to, when the wireless receiver **4** has failed to receive the response wireless signal (response signal) at least one time slots **62** that are of the plurality of uplink time slots **62** and are allocated to the slaves **10,** change the frame **50** having the downlink time slot **61** reserved for transmission of the synchronization signal to any one of the frames **53** other than the head frame **51,** and select the changed frame **53** as the head frame **51** of each of the subsequent and later super frames **40.**

As described above, in the present embodiment, when determining that the wireless communication with the fire sensor **10** is impossible, the relay controller **5** changes the frame (subframe) **50** for transmission of the synchronization signal. Therefore, each of the relays **1** can successfully communicate with the fire sensors **10** irrespective of the locations of the relays **1,** and thus can successfully perform operation check (regular monitoring) of the individual fire sensors **10.** After changing the frame **50** reserved for transmission of the synchronization signal, the relay controller **5** modifies the next and later super frames such that the changed frame **50** is treated as the head frame (1^{st} frame).

When determining that some fire sensor **10** fails to establish communication, the relay controller **5** may announce the changed frame (e.g., 12^{th} frame) **53** by use of the downlink time slot **B** (first time slot **61**) in the head frame (1^{st} frame) **51** of the super frame **40** to be sent next time.

In summary, when the wireless receiver **4** has failed to receive the response wireless signal at least one time slots **62** allocated to the slaves **10,** the relay controller **5** may cause the wireless sender **3** to send a wireless signal to announce the frame **53** reserved for transmission of the synchronization signal by use of the downlink time slot **61** in the head frame **51** of the super frame **40** to be sent next time. Thereafter, the relay controller **5** may change the frame to the frame **53** announced by the wireless signal.

In other words, the master **1** is configured to, when failing to receive the response signal from at least one of the two or more slaves **10,** perform the change process after performing a notification process. The master **1** is configured to, in the notification process, send a notification signal at the first time slot **61** of the head frame **51** of the current super frame **40 (40A).** The notification signal indicates the reference frame **53.**

The relay controller **5** sends the synchronization signal at the downlink time slot **B** of the announced frame (12^{th} frame) in the same super frame **40.** The sensor controller **15** of each fire sensor **10** can successfully receive the synchronization signal at the downlink time slot **B** of the 12^{th} frame announced by the relay **1.**

The relay controller (master controller) 5 may determine the changed frame (reference frame) **53** preliminarily. In this case, the relay controller **5** may determine the changed frame **53** randomly. When the relay controller **5** of each relay **1** determines the changed frame **53** randomly, it is possible to reduce the possibility that the same frame is selected as the changed frames **53** of the relays **1.**

Additionally, the relay controllers (master controllers) **5** make the changed frames **53** of the subsystems **30** different from each other. In other words, the master **1** is configured to select the reference frame **53** such that the plurality of (two or more) subsystems **30** have different reference frames **53.**

For example, the relay controller **5** of each relay **1** may determine the changed frame depending on the associated identification code (system code). In other words, in the wireless communication system, it is preferable that the peculiar identification codes be allocated individually to the plurality of masters **1** and the relay controller **5** determine the changed frame **53** with reference to the allocated identification code. In brief, the master **1** has the peculiar identification code. The master **1** is configured to select the reference frame **53** based on the peculiar identification code.

For example, when the system codes are consecutive numbers, the frame corresponding to the number which is equal to a product of the number of the system code and "n" (n is a natural number and is equal to or more than **2**) is selected as the changed frame. According to this modification, there may be no possibility that the changed frames of the relays **1** are the same.

As described above, the wireless communication system of the present embodiment includes the following first feature.

According to the first feature, the wireless communication system includes the plurality of (two or more) subsystems **30.** Each of the plurality of (two or more) subsystems **30** includes the single master (relay) 1 and the plurality of (two or more) slaves (fire sensors) **10.** The master **1** is configured to define the super frame **40** for wireless communication in conformity with the time division multiple access scheme. The super frame **40** includes the plurality of (three or more) frames **50** including one head frame **51** and the plurality of (two or more) subsequent frames **52.** Each of the plurality of (three or more) frames **50** includes plurality of (three or more) time slots **60** including one first time slot **61** allocated to the master **1,** and the plurality of (two or more) second time slots **62** individually allocated to the plurality of (two or more) slaves **10.** The master **1** is configured to send a wireless signal at the first time slot **61** and to wait for a wireless signal at the plurality of (two or more) second time slots **62.** Each of the plurality of (two or more) slaves **10** is configured to send a wireless signal at the allocated second time slot **62** of the plurality of (two or more) second time slots **62.** The master **1** is configured to send the synchronization signal at the first time slot **61** of the head frame **51.** Each of the plurality of (two or more) slaves **10** is configured to, when receiving the synchronization signal, send the response signal at the allocated second time slot **62** of the head frame **51.** The master **1** is configured to, when failing to receive the response signal from at least one of the plurality of (two or more) slaves **10,** perform the change process to change the super frame **40** from the current super frame **40A** to the new super frame **40B.** The master **1** is configured to, in the change process, define the new super frame **40B** such that the head frame **51** of the new super frame **40B** is synchronized with (coincide with) the reference frame **53** selected from the plurality of (two or more) subsequent frames **52** of the current super frame **40A.**

Further, the wireless communication system of the present embodiment includes the following second feature. Note that, the second feature is optional.

According to the second feature depending on the first feature, the master **1** includes the master wireless sender **3** configured to send a wireless signal, the master wireless receiver **4** configured to receive a wireless signal, and the master controller **5** configured to control the master wireless sender **3** and the master wireless receiver **4.** The master controller **5** is configured to control the master wireless sender **3** to send a wireless signal at the first time slot **61.** The master controller **5** is configured to control the master wireless receiver **4** to wait for a wireless signal at each of the two or more second time slots **62.** Each of the plurality of (two or more) slaves **10** includes the slave wireless sender **13** configured to send a wireless signal, the slave wireless receiver **14** configured to receive a wireless signal, and the slave controller **15** configured to control the slave wireless sender **13** and the slave wireless receiver **14.** The slave controller **15** is configured to control the slave wireless receiver **14** to wait for a wireless signal at the first time slot **61.** The slave controller **15** is configured to control the slave wireless sender **13** to send a wireless signal at the allocated second time slot **62.**

Further, the wireless communication system of the present embodiment may include the following third feature.

According to the third feature depending on the first or second feature, the master 1 is configured to, when failing to receive the response signal from at least one of the plurality of (two or more) slaves 10, perform the change process after performing the notification process. The master 1 is configured to, in the notification process, send the notification signal at the first time slot 61 of the head frame 51 of the current super frame 40A. The notification signal indicates the reference frame 53.

Further, the wireless communication system of the present embodiment may include the following fourth and fifth features.

According to the fourth feature depending on any one of the first to third features, the reference frame 53 is predetermined. Moreover, according to the fifth feature depending on the fourth feature, the master 1 is configured to determine the reference frame 53 randomly.

Further, the wireless communication system of the present embodiment may include the following sixth and seventh features instead of the fourth and fifth features.

According to the sixth feature depending on any one of the first to third features, the master 1 is configured to select the reference frame 53 such that the plurality of (two or more) subsystems 30 have different reference frames 53. Moreover, according to the seventh feature depending on the sixth feature, the master 1 has the peculiar identification code. The master 1 is configured to select the reference frame 53 based on the peculiar identification code.

As described above, in the wireless communication system of the present embodiment, when determining that the wireless communication with the slave 10 is impossible, the relay controller 5 changes the frame 50 for sending the synchronization signal. Therefore, it is possible to perform successful wireless communication between masters 1 and slaves 10 irrespective of the locations of the masters 1.

### (SECOND EMBODIMENT)

The relay controller 5 of the first embodiment determines the frame for sending the synchronization signal without considering a radio wave condition of the changed frame **53.** Hence, there is still a possibility that wireless communication between the relay **1** and the fire sensor **10 in** the changed frame **53** is made impossible by interference waves such as wireless signals sent and received in the other subsystems **30.**

Accordingly, it is preferable that, when frame change is required, the relay controller **5** checks radio wave conditions of the frames (2^{nd} to 30^{th} frames) other than the head frame (1^{st} frame) **51** and selects the k^{th} frame (k = 2, 3,..., 30) corresponding to a relatively fine radio wave condition, as the changed frame **53.**

The relay controller **5** of the present embodiment measures signal intensities of wireless signals in all the frames (2^{nd} to 30^{th} frames) that are the frames **50** constituting the super frame **40** except for the head frame (1^{st} frame). In other words, the master (relay) **1** is configured to, in the change process, measure a radio field intensity (in the present embodiment, the signal intensity of the received wireless signal) for each of the two or more subsequent frames **52** of the current super frame **40A.**

The relay controller **5** uses, as the signal intensity of the wireless signal, a Receiving Signal Strength Indication (RSSI) that is a DC voltage signal proportional to a magnitude of strength of a received signal outputted from the wireless receiver **4.**

The relay controller **5** selects as the changed frame **53** the k^{th} frame in which the signal intensities of all the time slots **D1 to Dm** are not greater than a predetermined threshold (first intensity). In other words, the master (relay) **1** selects as the reference frame **53** the subsequent frame **52** having the radio wave intensity that is not greater than the predetermined threshold (first intensity).

For example, it is assumed that the radio field intensities of the 2^{nd}, 4^{th}, and 16^{th} frames are greater than the predetermined threshold (first intensity). Based on this assumption, the master **1** selects the reference frame **53** from the remaining subsequent frames **52** (i.e., the 3^{rd}, 5^{th} to 15^{th}, and 17^{th} to 30^{th} frames) except for the 2^{nd}, 4^{th}, and 16^{th} frames.

As described above, the master **1** selects the subsequent frame **52** in which the radio field intensity is not greater than the predetermined threshold (first intensity), as candidates for the reference frame **53.** In other words, the master **1** excludes, from the candidates for the reference frame **53,** the subsequent frame **52** in which the radio field intensity is greater than the predetermined threshold (first intensity).

Alternatively, the relay controller **5** may select, as the changed frame **53,** a frame that is one of all the frames (2^{nd} to 30^{th} frames) except for the head frame (1^{st} frame) and has the smallest maximum of the signal intensity. In short, the master (relay) 1 selects the subsequent frame **52** in which the maximum of the radio field intensity is the smallest, as the reference frame **53.**

For example, when the maximum of the radio field intensity in the subsequent 12^{th} frame is the smallest, the master 1 selects the 12^{th} frame as the reference frame **53.**

Note that, in the above instance, the radio field intensity is measured for each second time slot **62** with regard to one frame **50.** However, the measurement of the radio field intensity may be performed one time for one frame **50.**

As described above, when the frame change is required, the master controller (relay controller) 5 measures the signal intensity of the wireless signal for each of all the frames **52** of the frames **50** constituting the super frame **40** except for the head frame **51,** and selects, as the changed frame **53,** the frame **52** in which the signal intensities of all the time slots are not greater than the predetermined threshold (first intensity) or the frame **52** in which the maximum of the signal intensity is the smallest of the signal intensities of all the frames **52.**

The relay controller **5** preferably repeats measuring the signal intensity at an interval sufficiently shorter than the sending period of one time slot **60.** When a period (i.e., the number of times) in which the signal intensity is greater than a predetermined threshold (second intensity) of a particular time slot **60** reaches a predetermined continuous period not longer than the sending period, the relay controller **5** preferably does not select, as the changed frame **53,** the frame **50** including the particular time slot **60.**

In summary, when the frame change is required, the master controller (relay controller) **5** measures the signal intensity of the wireless signal for each of all the frames **52** of the frames **50** constituting the super frame **40** except for the head frame **51,** and does not select, as the changed frame **53,** the frame **52** including the time slot **60** in which the period in which the signal intensity is greater than the predetermined threshold (second intensity) reaches the predetermined continuous period not longer than the time slot **60.**

In other words, the master **1** measures the radio field intensity for each of the two or more subsequent frames **52** of the current super frame **40A** in the change process. The master **1** excludes, from candidates for the reference frame **53,** the subsequent frame **52** in which the period in which the radio field intensity is greater than the predetermined threshold (second intensity) reaches the predetermined continuous period having a length not greater than the length of the time slot **60.**

For example, it is assumed that, with regard to the 25^{th} frame, the period in which the radio field intensity is greater than the predetermined threshold (second intensity) reaches the predetermined continuous period not longer than the time slot **60.** On this assumption, the master **1** excludes the 25^{th} frame from the candidates for the reference frame **53.** Consequently, the candidates for the reference frame **53** are the twenty-eight frames (i.e., the 2^{nd} to 24^{th} and 26^{th} to 30^{th} frames). Therefore, the master **1** selects the reference frame **53** from the plurality of subsequent frames (the 2^{nd} to 24^{th} and 26^{th} to 30^{th} frames) of the current super frame **40A.**

For example, the continuous period may have a similar length to the sending period having the same length of the time slot other than guard intervals respectively allocated to the first and last parts of the time slot (see **FIG. 6**). Note that, the guard interval is spare time for reducing influence of a difference between timings caused by a difference between operation clock frequencies of the fire sensor **10** and the relay **1** (operation clock frequencies of the microcomputers respectively constituting the sensor controller **15** and the relay controller **5**).

In the aforementioned present embodiment, when the frame change is required, the relay **controller 5** checks radio wave conditions of the frames (2^{nd} to 30^{th} frames) other than the head frame (1^{st} frame) and selects the k^{th} frame (k = 2, 3, ..., 30) having the relatively fine radio wave condition, as the changed frame. Hence, it is possible to reduce the possibility that wireless communication between the relay **1** and the fire sensor **10** in the changed frame **53** is made impossible by interference waves such as wireless signals sent and received in the other subsystems **30.**

As described above, the wireless communication system of the present embodiment may include at least one of the following eighth and ninth features.

According to the eighth feature depending on any one of the first to third features, the master **1** is configured to, in the change process, measure the radio field intensity for each of the plurality of (two or more) subsequent frames **52** of the current super frame **40A,** and select, as the reference frame **53,** the subsequent frame in which the radio field intensity is not greater than the predetermined threshold (first intensity), or the subsequent frame **52** in which the maximum of the radio field intensity is the smallest.

According to the ninth feature depending on any one of the first to eighth features, the plurality of (three or more) time slots **60** have the same length. The master 1 is configured to, in the change process, measure the radio field intensity for each of the plurality of (two or more) subsequent frames **52** of the current super frame **40A,** and exclude, from candidates for the reference frame **53,** the subsequent frame **52** in which the period in which the radio field intensity is greater than the predetermined threshold (second intensity) reaches the predetermined continuous period which is not longer than the time slot **60.**

### (THIRD EMBODIMENT)

According to some wireless communication standards, generally, a plurality of frequency channels are available. For example, wireless communication systems with communication areas overlapping each other use different frequency channels.

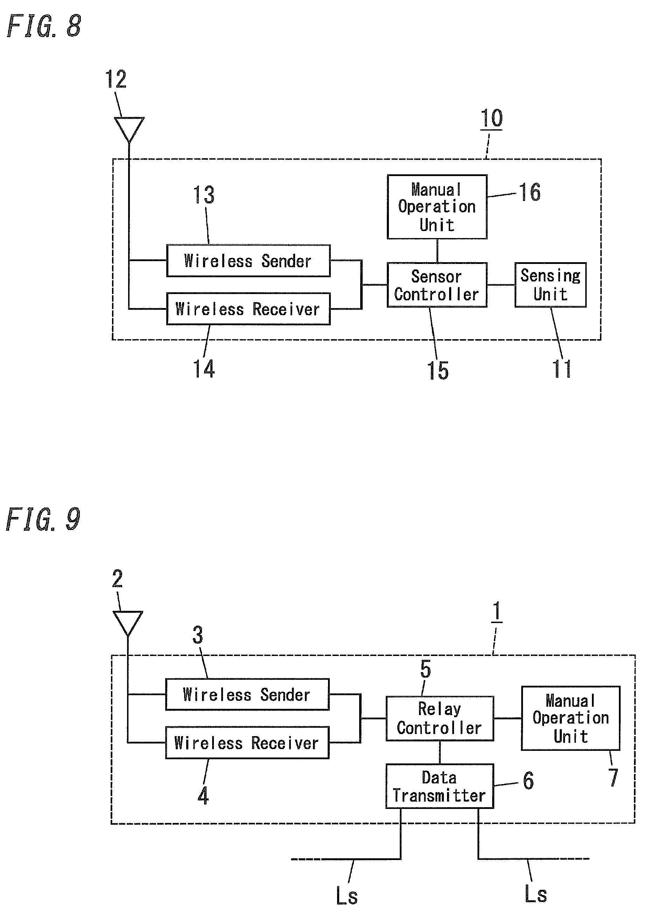

In the present embodiment, as shown in **FIG. 8****,** the fire sensor **10** further includes a manual operation unit **16** configured to receive a manual operation input. Likewise, as shown in **FIG. 9****,** the relay **1** further includes a manual operation unit **7** configured to receive a manual operation input.

The frequency channel for the wireless communication between the relay **1** and the fire sensor 10 can be selected by use of the manual operation units **16** and **7.**

It is assumed that the three frequency channels **CH1** to **CH3** are available. For example, the frequency channel **CH1** is used in the subsystem **30₁** including the relay **1₁** and the fire sensors **10₁ᵢ,** and the frequency channel **CH2** is used in the subsystem **30₂** (the subsystem including the relay **1₂** and the fire sensors **10₂ᵢ)** adjacent to the subsystem **30₁.**

In wireless communications using two or more frequency channels, send signals (wireless signals) are filtered such that adjacent channel leakage power (hereinafter referred to as "leakage power") is not greater than a prescribed power. Also in the present embodiment, the wireless sender **3** of the relay **1** and the wireless sender **13** of the fire sensor **10** filter wireless signals to reduce the leakage power.

Even when different frequency channels are allocated to the different subsystems **30,** wireless communication in one subsystem **30** may be prevented by wireless signals of another subsystem **30.** This may occur when the two relays **1₁** and **1₂** are installed relatively near each other.

For example, when the signal intensity of the signal sent from the far fire sensor **10**₁₁ and then received by the wireless receiver **4** of the relay **11** is equal to or less than the leakage power of the wireless signal sent from the relay **1₂,** the relay **1₁** is likely to miss this wireless signal.

In view of this, when the signal intensity of any one of the time slots **60** exceeds a threshold (third intensity), the relay controller **5** changes the frequency channel of the wireless receiver **4** from the current frequency channel (e.g., **CH1**) to another frequency channel (e.g., **CH2**), and measures the signal intensities of all the time slots 60 again.

When the signal intensity of a certain time slot **60** exceeds the threshold (third intensity), the relay controller **5** stores the position of the frame **50** including the certain time slot **60** (e.g., the frame number "k") in its memory. After completion of measurement of the signal intensity for all the frequency channels (**CH1** to **CH3**), the relay controller **5** selects the changed frame from the frames **50** except for the frame **50** corresponding to the frame number "k" stored in the memory.

In other words, the master (relay) **1** measures the radio field intensity for each of the two or more subsequent frames **52** of the current super frame **40A** on an in-use frequency channel (e.g., **CH1**) of the two or more frequency channels in the change process. The in-use frequency channel is a current frequency channel allocated to the subsystem **30** including the master **1.**

The master **1** determines whether the radio field intensity on the in-use frequency channel exceeds the predetermined first threshold (third intensity) for each of the two or more subsequent frames **52.** For example, the master **1** measures the radio field intensity for each second time slot **62** of the subsequent frame **52,** and uses the maximum one of the measured radio field intensities as the radio field intensity of this frame **52.**

When acknowledging the existence of the subsequent frame **52** (e.g., the 25^{th} frame) having the radio field intensity on the in-use frequency channel that exceeds the predetermined first threshold (third intensity), the master **1** measures the radio field intensities on the remaining frequency channels (e.g., **CH2** and **CH3**) of the two or more frequency channels for this subsequent frame (the 25^{th} frame).

The master **1** determines whether at least one of the radio field intensities on the remaining frequency channels (e.g., **CH2** and **CH3**) exceeds a predetermined second threshold (fourth intensity). Note that, in the present embodiment, the fourth intensity is equal to the third intensity (i.e., the first threshold is equal to the second threshold).

When at least one of the radio field intensities on the remaining frequency channels (e.g., **CH2** and **CH3**) exceeds the predetermined second threshold (fourth intensity), the master **1** excludes, from the candidates for the reference frame **53,** the subsequent frame (the 25^{th} frame) in which the radio field intensity on the in-use frequency channel is greater than the first threshold (third intensity). Whereas, when none of the radio field intensities on the remaining frequency channels (e.g., **CH2** and **CH3**) exceeds the predetermined second threshold (fourth intensity), the master 1 does not exclude, from the candidates for the reference frame **53,** the subsequent frame (the 25^{th} frame) in which the radio field intensity on the in-use frequency channel is greater than the first threshold (third intensity).

Consequently, it is possible to reduce the possibility that the wireless communication is impossible.

Accordingly, in the wireless communication system of the present embodiment, when the frame change is required, the masters (relays) **1** and the slaves (fire sensors) **10** of the plurality of subsystems **30** send and receive the wireless signals on the different frequency channels of the respective subsystems **30.** The master controller (relay controller) **5** measures the signal intensity of the wireless signal for each of all the frames **50** constituting the super frame **40.** When the signal intensity of the frame **50** exceeds the predetermined threshold (third intensity), the master controller **5** measures the signal intensity of the wireless signal of the frame **50** on the frequency channel used by a further subsystem **30.** When the signal intensity of the wireless signal of the frame **50** on the frequency channel used by the further subsystem **30** is greater than the threshold (third intensity), the master controller **5** does not select this frame **50** as the changed frame **53.**

In some cases, not the wireless signal of the subsystem **30** but external noises occurring unexpectedly may cause such an increase in the signal intensity that the signal intensity exceeds the threshold. When the frame **50** in which the increase in the signal intensity is caused by the unexpected external noises is selected as the changed frame **53,** there is a low possibility that the signal intensity is affected by the external noises again.

In view of this, when the signal intensity of any one of the time slots **60** exceeds the threshold (fifth intensity), the relay controller **5** controls the wireless receiver **4** to try to demodulate the received radio wave (wireless signal). When the received radio wave is the wireless signal of any one of the subsystems **30,** the wireless receiver **4** can demodulate the received radio wave normally. When the received radio wave is the unexpected external noises, the wireless receiver **4** cannot demodulate the received radio wave normally.

Hence, when the wireless receiver **4** can demodulate the received radio wave normally, the relay controller **5** determines that the received radio wave is the wireless signal of another subsystem. Then, the relay controller **5** stores in the memory the position of the frame **50** including the time slot **60** at which the wireless receiver **4** receives this radio wave (wireless signal).

When the wireless receiver **4** cannot demodulate the received radio wave normally, the relay controller **5** determines that the received radio wave is the unexpected external noises. Then, the relay controller **5** does not store in the memory the position of the frame **50** including the time slot at which the wireless receiver **4** receives this radio wave.

In other words, the master (relay) **1** measures the radio field intensity for each of the two or more subsequent frames **52** of the current super frame **40A** on an in-use frequency channel (e.g., **CH1**) of the two or more frequency channels in the change process.

The master **1** determines whether the radio field intensity on the in-use frequency channel exceeds the predetermined third threshold (fifth intensity) for each of the two or more subsequent frames **52.** For example, the master **1** measures the radio field intensity for each second time slot **62** of the subsequent frame **52,** and uses the maximum one of the measured radio field intensities as the radio field intensity of this frame **52.**

When acknowledging the existence of the subsequent frame **52** (e.g., the 25^{th} frame) having the radio field intensity on the in-use frequency channel that exceeds the predetermined third threshold (fifth intensity), the master **1** measures the radio field intensities on the remaining frequency channels (e.g., **CH2** and **CH3**) of the two or more frequency channels for this subsequent frame (the 25^{th} frame).

The master **1** determines whether at least one of the radio field intensities on the remaining frequency channels (e.g., **CH2** and **CH3**) exceeds a predetermined fourth threshold (sixth intensity). Note that, in the present embodiment, the sixth intensity is equal to the fifth intensity (i.e., the third threshold is equal to the fourth threshold).

When at least one of the radio field intensities on the remaining frequency channels (e.g., **CH2** and **CH3**) is greater than the predetermined fourth threshold (sixth intensity), the master **1** determines whether a cause of making the radio field intensities greater than the predetermined fourth threshold (sixth intensity) is a wireless signal of any one of the two or more subsystems **30.**

For example, the master 1 tries to demodulate the radio wave in which the radio field intensity is greater than the predetermined fourth threshold (sixth intensity). When the master **1** can complete the demodulation of the radio wave normally, the master **1** determines that the above cause is a wireless signal of any one of the plurality of subsystems. When the master **1** fails to complete the demodulation of the radio wave normally, the master **1** determines that the above cause is not a wireless signal of any one of the plurality of subsystems.

When the aforementioned cause is a wireless signal of any one of the two or more subsystems, the master **1** excludes, from the candidates for the reference frame **53,** the subsequent frame (the 25^{th} frame) in which the radio field intensity on the in-use frequency channel is greater than the third threshold (fifth intensity).

When the aforementioned cause is not a wireless signal of any one of the two or more subsystems, the master **1** does not exclude, from the candidates for the reference frame **53,** the subsequent frame (the 25^{th} frame) in which the radio field intensity on the in-use frequency channel is greater than the third threshold (fifth intensity).

Accordingly, there is no need to replace with another frame **50** the frame **50** including the time slot 60 in which the unexpected external noises occur.

Accordingly, in the wireless communication system of the present embodiment, the masters (relays) **1** and the slaves (fire sensors) **10** of the plurality of subsystems **30** send and receive the wireless signals on the different frequency channels of the respective subsystems **30.** When the frame change is required, the master controller (relay controller) **5** measures the signal intensity of the wireless signal for each of all the frames **50** constituting the super frame **40.** When the signal intensity of the frame **50** exceeds the predetermined threshold (fifth intensity), the master controller **5** measures the signal intensity of the wireless signal of the frame **50** on the frequency channel used by a further subsystem **30.** With reference to results of this measurement, the relay controller **5** allows the wireless receiver **4** to receive a wireless signal on the frequency channel in which the signal intensity is greater than the threshold (fifth intensity). When the wireless signal received by the wireless receiver **4** is identical to the wireless signal of any one of the subsystems **30,** the relay controller **5** does not select, as the changed frame **53,** the frame **50** in which the signal intensity is greater than the threshold (fifth intensity).

As described above, the wireless communication system of the present embodiment may include at least one of the following tenth and eleventh features.

According to the tenth feature depending on any one of the first to ninth features, each of the plurality of (two or more) subsystems **30** is configured to perform wireless communication by use of any one of plurality of (two or more) frequency channels. The master **1** is configured to, in the change process, measure the radio field intensity for each of the plurality of (two or more) subsequent frames **52** of the current super frame **40A** on the in-use frequency channel of the plurality of (two or more) frequency channels. The master **1** is configured to measure the radio field intensities on the remaining frequency channels of the plurality of (two or more) frequency channels for the subsequent frame **52** in which the radio field intensity on the in-use frequency channel is greater than the predetermined first threshold (third intensity). The master **1** is configured to, when at least one of the radio field intensities on the remaining frequency channels is greater than the predetermined second threshold (fourth intensity), exclude, from the candidates for the reference frame **53,** the subsequent frame **52** in which the radio field intensity on the in-use frequency channel is greater than the first threshold (third intensity).

According to the eleventh feature depending on any one of the first to tenth features, the plurality of (two or more) subsystems **30** are configured to perform wireless communication by use of plurality of (two or more) different frequency channels. The master **1** is configured to, in the change process, measure the radio field intensity for each of the plurality of (two or more) subsequent frames **52** of the current super frame **40A** on the in-use frequency channel of the plurality of (two or more) frequency channels. The master **1** is configured to measure the radio field intensities on the remaining frequency channels of the plurality of (two or more) frequency channels for the subsequent frame **52** in which the radio field intensity on the in-use frequency channel is greater than the predetermined third threshold (fifth intensity). The master **1** is configured to, when at least one of the radio field intensities on the remaining frequency channels is greater than the predetermined fourth threshold (sixth intensity), determine whether the cause of making the radio field intensities greater than the predetermined fourth threshold is a wireless signal of any one of the plurality of (two or more) subsystems **30.** The master **1** is configured to, when the cause is a wireless signal of any one of the plurality of (two or more) subsystems **30,** exclude, from the candidates for the reference frame **53,** the subsequent frame **52** in which the radio field intensity on the in-use frequency channel is greater than the third threshold (fifth intensity).

Moreover, instead of changing the frame **50** for transmission of the synchronization signal in response to conclusion that wireless communication with the fire sensor **10** is impossible, the relay controller **5** may change the frame **50** in advance based on prediction of impossibility of wireless communication with the fire sensor **10.**

In other words, the master controller (relay controller) **5** measures the signal intensities for a period (measurement period) for measurement longer than the period (length) of the super frame **40,** and determines the changed frame **53** based on the measured signal intensities. Thereafter, the master controller (relay controller) **5** controls the wireless sender **3** to send a wireless signal of notifying the slaves (fire sensors) **10** of the determined changed frame **53.**

For example, the master (relay) **1** performs measurement of the radio field intensity for each of the plurality of subsequent frames **52** of the super frame **40.** The master **1** determines the reference frame **53** based on the measured radio field intensities. The master **1** sends the wireless signal indicative of the determined reference frame **53** to the plurality of slaves (fire sensors) **10.**

The operation of the relay controller **5** in this case is described in detail with reference to a flow chart shown in **FIG. 9****.**

After completion of the regular monitoring, the relay controller **5** measures the signal intensities continuously. When the measured signal intensity is greater than a threshold **Th1,** the relay controller **5** changes the frequency channels to measure the signal intensity for each of all the frequency channels.

When the maximum of the measured signal intensities of the respective all the frequency channels is greater than a further threshold **Th2** (> **Th1**), the relay controller **5** tries to receive a radio wave on the frequency channel in which the maximum is measured.

When failing to extract the frame from the received radio wave, the relay controller **5** determines the received radio wave is external noises, and resumes the measurement of the signal intensities.

When succeeding in the extraction of the frame, the relay controller **5** determines the received radio wave is a wireless signal of any one of the subsystems **30,** and records the frame number of the frame **50** at which the wireless signal is received.

As described above, for each of the plurality of subsequent frames **52** of the super frame **40,** the relay **1** determines whether the subsequent frame **52** receives the wireless signal from a different subsystem **30** from the subsystem **30** including the relay **1.** The master **1** excludes the subsequent frame **52** receiving the wireless signal from the different subsystem **30** from the candidates for the reference frame **53.**

When the measurement of the signal intensity of the last frame **50** of the super frame **40** is completed, the relay controller **5** checks whether the recorded frame numbers include the frame number of the frame (e.g., the 2^{nd} frame and the 30^{th} frame) adjacent to the 1^{st} frame. When the recorded frame numbers do not include the frame number of the frame (e.g., the 2^{nd} frame and the 30^{th} frame) adjacent to the 1^{st} frame, the relay controller **5** starts the normal regular monitoring. The super frames **40** are set repeatedly and continuously, and therefore the frames adjacent to the head frame (the 1^{st} frame) of the n^{th} super frame **40** include not only the 2^{nd} frame of the n^{th} super frame **40** but also the last frame (the 30^{th} frame) of the n-1^{th} super frame **40.**

When the recorded frame numbers include the frame number of the frame (e.g., the 2^{nd} frame and the 30^{th} frame) adjacent to the 1^{st} frame, the relay controller **5** concludes that the probability that the wireless communication is to be impossible is high, and selects a different frame (e.g., the frames other than the 30^{th} frame, the 1^{st} frame, and the 2^{nd} frame) as the changed frame **53.**

The relay controller **5** provides instructions to select the changed frame to each fire sensor **10** at the next regular monitoring.

In a preferred instance, the relay controller **5** selects as the changed frame **53** one from the frames **50** other than the frames **50** (e.g., the 2^{nd} frame and the 30^{th} frame) next to the 1^{st} frame. In brief, it is preferable that the master controller (relay controller) **5** select the changed frame **53** from the frames **50** other than the frames **50** adjacent to the head frame **51.**

When the frame (e.g., the 2^{nd} frame and the 30^{th} frame) next to the 1^{st} frame is selected, the changed frame is likely to interfere with wireless communication of the different subsystems **30.** The above preferred instance can avoid this unwanted situation.

Note that, the relay controller **5** may perform the measurement of the signal intensities for the measurement period (the period of the super frame **40**) two or more times to determine the changed frame. In this case, it is possible to avoid the improper change of the frame caused by single external noises.

As described above, the master **1** may perform a prediction process regularly. In the prediction process, the master **1** determines whether a possibility that wireless communication with the fire sensor **10** becomes impossible is high.

For example, the master **1** measures the radio field intensity of the adjacent frame (e.g., the 2^{nd} and 30^{th} frames) to the head frame **51** of the current super frame **40A** on the in-use frequency channel (e.g., CH1).

The master 1 determines whether the radio field intensity on the in-use frequency channel exceeds a predetermined fifth threshold (seventh intensity) for the adjacent frame.

When the radio field intensity on the in-use frequency channel of the adjacent frame exceeds the predetermined fifth threshold (seventh intensity), the master 1 measures the radio field intensities on the remaining frequency channels (e.g., CH2 and CH3) of the two or more frequency channels for this adjacent frame.

The master 1 determines whether at least one of the radio field intensities on the remaining frequency channels (e.g., CH2 and CH3) exceeds a predetermined sixth threshold (eighth intensity). Note that, in the present embodiment, the eighth intensity is equal to the seventh intensity (i.e., the fifth threshold is equal to the sixth threshold).

When at least one of the radio field intensities on the remaining frequency channels (e.g., CH2 and CH3) is greater than the predetermined sixth threshold (eighth intensity), the master **1** determines whether a cause of making the radio field intensities greater than the predetermined sixth threshold (eighth intensity) is a wireless signal of any one of the two or more subsystems **30.**

For example, the master 1 tries to demodulate the radio wave in which the radio field intensity is greater than the predetermined sixth threshold (eighth intensity). When the master **1** can complete the demodulation of the radio wave normally, the master **1** determines that the above cause is a wireless signal of any one of the plurality of subsystems. When the master **1** fails to complete the demodulation of the radio wave normally, the master **1** determines that the above cause is not a wireless signal of any one of the plurality of subsystems.

When the aforementioned cause is a wireless signal of any one of the two or more subsystems, the master **1** concludes that the possibility that wireless communication with the fire sensor **10** becomes impossible is high. When the aforementioned cause is not a wireless signal of any one of the two or more subsystems, the master **1** concludes that the possibility that wireless communication with the fire sensor **10** becomes impossible is not high.

When concluding that the possibility that wireless communication with the fire sensor **10** becomes impossible is high in the prediction process, the master **1** performs the change process. When concluding that the possibility that wireless communication with the fire sensor **10** becomes impossible is not high in the prediction process, the master 1 does not perform the change process.

As described above, the wireless communication system of the present embodiment may include the following twelfth feature.

According to the twelfth feature depending on the first or second feature, the master (relay) **1** is configured to: perform measurement of the radio field intensity for each of the plurality of (two or more) subsequent frames **52** of the current super frame **40A;** determine the reference frame **53** based on the measured radio field intensities; and send the wireless signal indicative of the determined reference frame **53** to the plurality of (two or more) slaves (fire sensors) **10.**

Further, the wireless communication system of the present embodiment may include the following thirteenth feature.

According to the thirteenth feature depending on the twelfth feature, the master **1** is configured to: perform the measurement of the radio field intensity for each of the plurality of (two or more) subsequent frames **52** of the current super frame **40A** two or more times; and determine the reference frame **53** based on results of the two or more measurements.

Further, the wireless communication system of the present embodiment may include the following fourteenth feature.

According to the fourteenth feature depending on any one of the first to thirteenth features, the master **1** is configured to exclude, from the candidates for the reference frame **53,** the subsequent frame **52** which is one of the plurality of (two or more) subsequent frames **52** of the current super frame **40A** and is adjacent to the head frame **51** of the current super frame **40A.**

## Claims

1. A wireless communication system, comprising: two or more subsystems (30), each of the two or more subsystems (30) including a master (1) and two or more slaves (10),
the master (1) being configured to define a super frame (40) for wireless communication in conformity with a time division multiple access scheme, the super frame (40) including three or more frames (50) including one head frame (51) and two or more subsequent frames (52),
each of the three or more frames (50) including three or more time slots (60) including one first time slot (61) allocated to the master (1), and two or more second time slots (62) individually allocated to the two or more slaves (10), the master (1) being configured to send a wireless signal at the first time slot (61) and to wait for a wireless signal at the two or more second time slots (62), each of the two or more slaves (10) being configured to send a wireless signal at an allocated second time slot (62) of the two or more second time slots (62), the master (1) being configured to send a synchronization signal at the first time slot (61) of the head frame (51),
each of the two or more slaves (10) being configured to, when receiving the synchronization signal, send a response signal at the allocated second time slot (62) of the head frame (51),
the master (1) being configured to, when failing to receive the response signal from at least one of the two or more slaves (10), perform a change process to change the super frame (40) from a current super frame (40A) to a new super frame (40B), and
the master (1) being configured to, in the change process, define the new super frame (40B) such that the position of the head frame (51) of the new super frame (40B) coincides with the position of a reference frame (53) selected from the two or more subsequent frames (52) of the current super frame (40A).

2. The wireless communication system according to claim 1, wherein:
the master (1) includes a master wireless sender (3) configured to send a wireless signal, a master wireless receiver (4) configured to receive a wireless signal, and a master controller (5) configured to control the master wireless sender (3) and the master wireless receiver (4);
the master controller (5) is configured to control the master wireless sender (3) to send a wireless signal at the first time slot (61);
the master controller (5) is configured to control the master wireless receiver (4) to wait for a wireless signal at each of the two or more second time slots (62);
each of the two or more slaves (10) includes a slave wireless sender (13) configured to send a wireless signal, a slave wireless receiver (14) configured to receive a wireless signal, and a slave controller (15) configured to control the slave wireless sender (13) and the slave wireless receiver (14);
the slave controller (15) is configured to control the slave wireless receiver (14) to wait for a wireless signal at the first time slot (61); and
the slave controller (15) is configured to control the slave wireless sender (13) to send a wireless signal at the allocated second time slot (62).

3. The wireless communication system according to claim 1 or 2, wherein:
the master (1) is configured to, when failing to receive the response signal from at least one of the two or more slaves (10), perform the change process after performing a notification process;
the master (1) is configured to, in the notification process, send a notification signal at the first time slot (61) of the head frame (51) of the current super frame (40A); and
the notification signal indicates the reference frame (53).

4. The wireless communication system according to any one of claims 1 to 3,
wherein
the reference frame (53) is predetermined.

5. The wireless communication system according to claim 4, wherein
the master (1) is configured to determine the reference frame (53) randomly.

6. The wireless communication system according to any one of claims 1 to 3,
wherein
the master (1) is configured to select the reference frame (53) such that the two or more subsystems (30) have different reference frames (53).

7. The wireless communication system according to claim 6, wherein:
the master (1) has an identification code; and
the master (1) is configured to select the reference frame (53) based on the identification code.

8. The wireless communication system according to any one of claims 1 to 3,
wherein
the master (1) is configured to, in the change process,
measure a radio field intensity for each of the two or more subsequent frames (52) of the current super frame (40A), and
select, as the reference frame (53), a subsequent frame (52) in which the radio field intensity is not greater than a predetermined threshold, or a subsequent frame (52) in which the maximum of the radio field intensity is the smallest of the radio field intensities of all the subsequent frames (52).

9. The wireless communication system according to any one of claims 1 to 8, wherein:
the three or more time slots (60) have the same length;
the master (1) is configured to, in the change process,
measure a radio field intensity for each of the two or more subsequent frames (52) of the current super frame (40A), and
exclude, from candidates for the reference frame (53), a subsequent frame (52) in which a period in which the radio field intensity is greater than a predetermined threshold reaches a predetermined continuous period; and
the predetermined continuous period has a length not longer than the length of the time slot (60).

10. The wireless communication system according to any one of claims 1 to 9, wherein:
each of the two or more subsystems (30) is configured to perform wireless communication by use of any one of two or more frequency channels (CH1 to CH3); and
the master (1) is configured to, in the change process,
measure a radio field intensity for each of the two or more subsequent frames (52) of the current super frame (40A) on an in-use frequency channel of the two or more frequency channels (CH1 to CH3),
measure radio field intensities on remaining frequency channels of the two or more frequency channels (CH1 to CH3) for a subsequent frame (52) in which the radio field intensity on the in-use frequency channel is greater than a predetermined first threshold, and
when at least one of the radio field intensities on the remaining frequency channels is greater than a predetermined second threshold, exclude, from candidates for the reference frame (53), a subsequent frame (52) in which the radio field intensity on the in-use frequency channel is greater than the first threshold.

11. The wireless communication system according to any one of claims 1 to 10, wherein:
the two or more subsystems (30) are configured to perform wireless communication by use of two or more different frequency channels (CH1 to CH3); and
the master (1) is configured to, in the change process,
measure a radio field intensity for each of the two or more subsequent frames (52) of the current super frame (40A) on an in-use frequency channel of the two or more frequency channels (CH1 to CH3),
measure radio field intensities on remaining frequency channels of the two or more frequency channels (CH1 to CH3) for a subsequent frame (52) in which the radio field intensity on the in-use frequency channel is greater than a predetermined third threshold,
when at least one of the radio field intensities on the remaining frequency channels is greater than a predetermined fourth threshold, determine whether a cause of making the radio field intensities greater than the predetermined fourth threshold is a wireless signal of any one of the two or more subsystems (30), and
when the cause is a wireless signal of any one of the two or more subsystems (30), exclude, from candidates for the reference frame (53), a subsequent frame (52) in which the radio field intensity on the in-use frequency channel is greater than the third threshold.

12. The wireless communication system according to claim 1 or 2, wherein the master (1) is configured to:
perform measurement of a radio field intensity for each of the two or more subsequent frames (52) of the current super frame (40A);
determine the reference frame (53) based on the measured radio field intensities; and
send a wireless signal indicative of the determined reference frame (53) to the two or more slaves (10).

13. The wireless communication system according to claim 12, wherein
the master (1) is configured to:
perform the measurement of the radio field intensity for each of the two or more subsequent frames (52) of the current super frame (40A) two or more times; and
determine the reference frame (53) based on results of the two or more measurements.

14. The wireless communication system according to any one of claims 1 to 13,
wherein
the master (1) is configured to exclude, from candidates for the reference frame (53), a subsequent frame (52) which is one of the two or more subsequent frames (52) of the current super frame (40A) and is adjacent to the head frame (51) of the current super frame (40A).

## Patentansprüche

1. Drahtloses Kommunikationssystem, welches Folgendes umfasst:
zwei oder mehr Subsysteme (30), wobei jedes der zwei oder mehr Subsysteme (30) einen Master (1) und zwei oder mehr Slaves (10) beinhaltet,
wobei der Master (1) zum Definieren eines Superframes (40) für die drahtlose Kommunikation in Übereinstimmung mit einem TDMA (Time Division Multiple Access) -Schema konfiguriert ist, wobei der Superframe (40) drei oder mehr Frames (50) beinhaltet, die einen Hauptframe (51) und zwei oder mehr nachfolgende Frames (52) beinhalten,
wobei jeder der drei oder mehr Frames (50) drei oder mehr Zeitschlitze (60) beinhaltet, die einen ersten Zeitschlitz (61), der dem Master (1) zugeordnet ist, und zwei oder mehr zweite Zeitschlitze (62), die individuell den zwei oder mehr Slaves (10) zugeordnet sind, beinhalten,
wobei der Master (1) zum Senden eines drahtlosen Signals in dem ersten Zeitschlitz (61) und zum Warten auf ein drahtloses Signal in den zwei oder mehr zweiten Zeitschlitzen (62) konfiguriert ist,
wobei jeder der zwei oder mehr Slaves (10) zum Senden eines drahtlosen Signals in einem zugeordneten zweiten Zeitschlitz (62) der zwei oder mehr zweiten Zeitschlitze (62) konfiguriert ist,
wobei der Master (1) zum Senden eines Synchronisierungssignals in dem ersten Zeitschlitz (61) des Hauptframes (51) konfiguriert ist,
wobei jeder der zwei oder mehr Slaves (10), wenn das Synchronisierungssignal empfangen wird, zum Senden eines Antwortsignals in dem zugeordneten zweiten Zeitschlitz (62) des Hauptframes (51) konfiguriert ist,
wobei der Master (1), wenn das Antwortsignal von mindestens einem der zwei oder mehr Slaves (10) nicht empfangen wird, zum Durchführen eines Änderungsprozesses zum Ändern des Superframes (40) von einem aktuellen Superframe (40A) zu einem neuen Superframe (40B) konfiguriert ist, und
wobei der Master (1), in dem Änderungsprozess, zum Definieren des neuen Superframes (40B), derart, dass die Position des Hauptframes (51) des neuen Superframes (40B) mit der Position eines Referenzframes (53), der aus den zwei oder mehr nachfolgenden Frames (52) des aktuellen Superframes (40A) ausgewählt ist, übereinstimmt, konfiguriert ist.

2. Drahtloses Kommunikationssystem nach Anspruch 1, wobei:
der Master (1) einen drahtlosen Mastersender (3), der zum Senden eines drahtlosen Signals konfiguriert ist, einen drahtlosen Masterempfänger (4), der zum Empfangen eines drahtlosen Signals konfiguriert ist, und einen Mastercontroller (5), der zum Steuern des drahtlosen Mastersenders (3) und des drahtlosen Masterempfängers (4) konfiguriert ist, beinhaltet;
der Mastercontroller (5) zum Steuern des drahtlosen Mastersenders (3) zum Senden eines drahtlosen Signals in dem ersten Zeitschlitz (61) konfiguriert ist;
der Mastercontroller (5) zum Steuern des drahtlosen Masterempfängers (4) zum Warten auf ein drahtloses Signal in jedem der zwei oder mehr zweiten Zeitschlitze (62) konfiguriert ist;
jeder der zwei oder mehr Slaves (10) einen drahtlosen Slavesender (13), der zum Senden eines drahtlosen Signals konfiguriert ist, einen drahtlosen Slaveempfänger (14), der zum Empfangen eines drahtlosen Signals konfiguriert ist, und
einen Slavecontroller (15), der zum Steuern des drahtlosen Slavesenders (13) und des drahtlosen Slaveempfängers (14) konfiguriert ist, beinhaltet;
der Slavecontroller (15) zum Steuern des drahtlosen Slaveempfängers (14) zum Warten auf ein drahtloses Signal in dem ersten Zeitschlitz (61) konfiguriert ist; und
der Slavecontroller (15) zum Steuern des drahtlosen Slavesenders (13) zum Senden eines drahtlosen Signals in dem zugeordneten zweiten Zeitschlitz (62) konfiguriert ist.

3. Drahtloses Kommunikationssystem nach Anspruch 1 oder 2, wobei:
der Master (1), wenn das Antwortsignal von mindestens einem der zwei oder mehr Slaves (10) nicht empfangen wird, zum Durchführen des Änderungsprozesses nach dem Durchführen eines Benachrichtigungsprozesses konfiguriert ist;
der Master (1), in dem Benachrichtigungsprozess, zum Senden eines Benachrichtigungssignals in dem ersten Zeitschlitz (61) des Hauptframes (51) des aktuellen Superframes (40A) konfiguriert ist; und
das Benachrichtigungssignal den Referenzframe (53) angibt.

4. Drahtloses Kommunikationssystem nach einem der Ansprüche 1 bis 3, wobei
der Referenzframe (53) vorbestimmt ist.

5. Drahtloses Kommunikationssystem nach Anspruch 4, wobei
der Master (1) zum zufälligen Bestimmen des Referenzframes (53) konfiguriert ist.

6. Drahtloses Kommunikationssystem nach einem der Ansprüche 1 bis 3, wobei
der Master (1) zum Auswählen des Referenzframes (53), derart, dass die zwei oder mehr Subsysteme (30) unterschiedliche Referenzframes (53) aufweisen, konfiguriert ist.

7. Drahtloses Kommunikationssystem nach Anspruch 6, wobei:
der Master (1) einen Identifikationscode aufweist; und
der Master (1) zum Auswählen des Referenzframes (53) basierend auf dem Identifikationscode konfiguriert ist.

8. Drahtloses Kommunikationssystem nach einem der Ansprüche 1 bis 3, wobei
der Master (1), in dem Änderungsprozess, zum
Messen einer Funkfeldintensität für jeden der zwei oder mehr nachfolgenden Frames (52) des aktuellen Superframes (40A), und
Auswählen, als den Referenzframe (53), eines nachfolgenden Frames (52), in welchem die Funkfeldintensität nicht höher als eine vorbestimmte Schwelle ist, oder eines nachfolgenden Frames (52), in welchem das Maximum der Funkfeldintensität die geringste der Funkfeldintensitäten sämtlicher nachfolgender Frames (52) ist, konfiguriert ist.

9. Drahtloses Kommunikationssystem nach einem der Ansprüche 1 bis 8, wobei:
die drei oder mehr Zeitschlitze (60) die gleiche Länge aufweisen;
der Master (1), in dem Änderungsprozess, zum
Messen einer Funkfeldintensität für jeden der zwei oder mehr nachfolgenden Frames (52) des aktuellen Superframes (40A), und
Ausschließen, aus Kandidaten für den Referenzframe (53), eines nachfolgenden Frames (52), in welchem ein Zeitraum, in welchem die Funkfeldintensität höher als eine vorbestimmte Schwelle ist, einen vorbestimmten ununterbrochenen Zeitraum erreicht, konfiguriert ist; und
der vorbestimmte ununterbrochene Zeitraum eine Länge von nicht mehr als der Länge des Zeitschlitzes (60) aufweist.

10. Drahtloses Kommunikationssystem nach einem der Ansprüche 1 bis 9, wobei:
jedes der zwei oder mehr Subsysteme (30) zum Durchführen der drahtlosen Kommunikation durch Verwendung eines von zwei oder mehr Frequenzkanälen (CH1 bis CH3) konfiguriert ist; und
der Master (1), in dem Änderungsprozess, zum
Messen einer Funkfeldintensität für jeden der zwei oder mehr nachfolgenden Frames (52) des aktuellen Superframes (40A) auf einem in Verwendung befindlichen Frequenzkanal der zwei oder mehr Frequenzkanäle (CH1 bis CH3),
Messen der Funkfeldintensitäten auf verbleibenden Frequenzkanälen der zwei oder mehr Frequenzkanäle (CH1 bis CH3) für einen nachfolgenden Frame (52), in welchem die Funkfeldintensität auf dem in Verwendung befindlichen Frequenzkanal höher als eine vorbestimmte erste Schwelle ist, und
wenn mindestens eine der Funkfeldintensitäten auf den verbleibenden Frequenzkanälen höher als eine vorbestimmte zweite Schwelle ist, Ausschließen, aus Kandidaten für den Referenzframe (53), eines nachfolgenden Frames (52), in welchem die Funkfeldintensität auf dem in Verwendung befindlichen Frequenzkanal höher als die erste Schwelle ist, konfiguriert ist.

11. Drahtloses Kommunikationssystem nach einem der Ansprüche 1 bis 10, wobei:
die zwei oder mehr Subsysteme (30) zum Durchführen der drahtlosen Kommunikation durch Verwendung von zwei oder mehr unterschiedlichen Frequenzkanälen (CH1 bis CH3) konfiguriert sind; und
der Master (1), in dem Änderungsprozess, zum Messen einer Funkfeldintensität für jeden der zwei oder mehr nachfolgenden Frames (52) des aktuellen Superframes (40A) auf einem in Verwendung befindlichen Frequenzkanal der zwei oder mehr Frequenzkanäle (CH1 bis CH3),
Messen der Funkfeldintensitäten auf verbleibenden Frequenzkanälen der zwei oder mehr Frequenzkanäle (CH1 bis CH3) für einen nachfolgenden Frame (52), in welchem die Funkfeldintensität auf dem in Verwendung befindlichen Frequenzkanal höher als eine vorbestimmte dritte Schwelle ist,
wenn mindestens eine der Funkfeldintensitäten auf den verbleibenden Frequenzkanälen höher als eine vorbestimmte vierte Schwelle ist, Bestimmen, ob eine Ursache des Erhöhens der Funkfeldintensitäten über die vorbestimmte vierte Schwelle ein drahtloses Signal eines der zwei oder mehr Subsysteme (30) ist, und
wenn die Ursache ein drahtloses Signal eines der zwei oder mehr Subsysteme (30) ist, Ausschließen, aus Kandidaten für den Referenzframe (53), eines nachfolgenden Frames (52), in welchem die Funkfeldintensität auf dem in Verwendung befindlichen Frequenzkanal höher als die dritte Schwelle ist, konfiguriert ist.

12. Drahtloses Kommunikationssystem nach Anspruch 1 oder 2, wobei der Master (1) konfiguriert ist zum:
Durchführen einer Messung einer Funkfeldintensität für jeden der zwei oder mehr nachfolgenden Frames (52) des aktuellen Superframes (40A);
Bestimmen des Referenzframes (53) basierend auf den gemessenen Funkfeldintensitäten; und
Senden eines drahtlosen Signals, das indikativ für den bestimmten Referenzframe (53) ist, an die zwei oder mehr Slaves (10).

13. Drahtloses Kommunikationssystem nach Anspruch 12, wobei der Master (1) konfiguriert ist zum:
zwei- oder mehrmaligen Durchführen der Messung der Funkfeldintensität für jeden der zwei oder mehr nachfolgenden Frames (52) des aktuellen Superframes (40A); und
Bestimmen des Referenzframes (53) basierend auf Ergebnissen der zwei oder mehr Messungen.

14. Drahtloses Kommunikationssystem nach einem der Ansprüche 1 bis 13, wobei
der Master (1) zum Ausschließen, aus Kandidaten für den Referenzframe (53), eines nachfolgenden Frames (52), bei welchem es sich um einen der zwei oder mehr nachfolgenden Frames (52) des aktuellen Superframes (40A) handelt und der an den Hauptframe (51) des aktuellen Superframes (40A) angrenzt, konfiguriert ist.

## Revendications

1. Système de communication sans fil, comportant : deux sous-systèmes ou plus (30), chacun des deux sous-systèmes ou plus (30) incluant un maître (1) et deux esclaves ou plus (10) ;
le maître (1) étant configuré de manière à définir une supertrame (40) pour une communication sans fil en conformité avec un schéma d'accès multiple par répartition dans le temps, la supertrame (40) incluant trois trames ou plus (50) incluant une trame de tête (51) et deux trames subséquentes ou plus (52) ;
chacune des trois trames ou plus (50) incluant trois créneaux temporels ou plus (60) incluant un premier créneau temporel (61) associé au maître (1), et deux seconds créneaux temporels ou plus (62) affectés individuellement aux deux esclaves ou plus (10), le maître (1) étant configuré de manière à envoyer un signal sans fil au cours du premier créneau temporel (61) et à attendre un signal sans fil au cours des deux seconds créneaux temporels ou plus (62), chacun des deux esclaves ou plus (10) étant configuré de manière à envoyer un signal sans fil au cours d'un second créneau temporel affecté (62) des deux seconds créneaux temporels ou plus (62), le maître (1) étant configuré de manière à envoyer un signal de synchronisation au cours du premier créneau temporel (61) de la trame de tête (51) ;
chacun des deux esclaves ou plus (10) étant configuré de manière à, lors de la réception du signal de synchronisation, envoyer un signal de réponse au cours du second créneau temporel affecté (62) de la trame de tête (51) ;
le maître (1) étant configuré de manière à, lors d'un échec en ce qui concerne la réception du signal de réponse en provenance d'au moins l'un des deux esclaves ou plus (10), mettre en oeuvre un processus de modification visant à modifier la supertrame (40), d'une supertrame en cours (40A) en une nouvelle supertrame (40B) ; et
le maître (1) étant configuré de manière à, au cours du processus de modification, définir la nouvelle supertrame (40B) de sorte que la position de la trame de tête (51) de la nouvelle supertrame (40B) coïncide avec la position d'une trame de référence (53) sélectionnée parmi les deux trames subséquentes ou plus (52) de la supertrame en cours (40A).

2. Système de communication sans fil selon la revendication 1, dans lequel :
le maître (1) inclut un émetteur sans fil maître (3) configuré de manière à envoyer un signal sans fil, un récepteur sans fil maître (4) configuré de manière à recevoir un signal sans fil, et un contrôleur maître (5) configuré de manière à commander l'émetteur sans fil maître (3) et le récepteur sans fil maître (4) ;
le contrôleur maître (5) est configuré de manière à commander à l'émetteur sans fil maître (3) d'envoyer un signal sans fil au cours du premier créneau temporel (61) ;
le contrôleur maître (5) est configuré de manière à commander au récepteur sans fil maître (4) d'attendre un signal sans fil au cours de chacun des deux seconds créneaux temporels ou plus (62) ;
chacun des deux esclaves ou plus (10) inclut un émetteur sans fil esclave (13) configuré de manière à envoyer un signal sans fil, un récepteur sans fil esclave (14) configuré de manière à recevoir un signal sans fil, et un contrôleur esclave (15) configuré de manière à commander l'émetteur sans fil esclave (13) et le récepteur sans fil esclave (14) ;
le contrôleur esclave (15) est configuré de manière à commander au récepteur sans fil esclave (14) d'attendre un signal sans fil au cours du premier créneau temporel (61) ; et
le contrôleur esclave (15) est configuré de manière à commander à l'émetteur sans fil esclave (13) d'envoyer un signal sans fil au cours du second créneau temporel affecté (62).

3. Système de communication sans fil selon la revendication 1 ou 2, dans lequel :
le maître (1) est configuré de manière à, lors d'un échec en ce qui concerne la réception du signal de réponse en provenance d'au moins l'un des deux esclaves ou plus (10), mettre en oeuvre le processus de modification suite à la mise en oeuvre d'un processus de notification ;
le maître (1) est configuré de manière à, au cours du processus de notification, envoyer un signal de notification au cours du premier créneau temporel (61) de la trame de tête (51) de la supertrame en cours (40A) ; et
le signal de notification indique la trame de référence (53).

4. Système de communication sans fil selon l'une quelconque des revendications 1 à 3, dans lequel :
la trame de référence (53) est prédéterminée.

5. Système de communication sans fil selon la revendication 4, dans lequel :
le maître (1) est configuré de manière à déterminer la trame de référence (53) de façon aléatoire.

6. Système de communication sans fil selon l'une quelconque des revendications 1 à 3, dans lequel :
le maître (1) est configuré de manière à sélectionner la trame de référence (53) de sorte que les deux sous-systèmes ou plus (30) présentent des trames de référence distinctes (53).

7. Système de communication sans fil selon la revendication 6, dans lequel :
le maître (1) présente un code d'identification ; et
le maître (1) est configuré de manière à sélectionner la trame de référence (53) sur la base du code d'identification.

8. Système de communication sans fil selon l'une quelconque des revendications 1 à 3, dans lequel :
le maître (1) est configuré de manière à, au cours du processus de modification,
mesurer une intensité de champ radioélectrique pour chacune des deux trames subséquentes ou plus (52) de la supertrame en cours (40A) ; et
sélectionner, en tant que la trame de référence (53), une trame subséquente (52) dans laquelle l'intensité de champ radioélectrique n'est pas supérieure à un seuil prédéterminé, ou une trame subséquente (52) dans laquelle le maximum de l'intensité de champ radioélectrique correspond à la plus faible des intensités de champ radioélectrique de la totalité des trames subséquentes (52).

9. Système de communication sans fil selon l'une quelconque des revendications 1 à 8, dans lequel :
les trois créneaux temporels ou plus (60) présentent la même durée ; le maître (1) est configuré de manière à, au cours du processus de modification,
mesurer une intensité de champ radioélectrique pour chacune des deux trames subséquentes ou plus (52) de la supertrame en cours (40A) ; et
exclure, de candidats pour la trame de référence (53), une trame subséquente (52) dans laquelle une période au cours de laquelle l'intensité de champ radioélectrique est supérieure à un seuil prédéterminé atteint une période continue prédéterminée ; et
la période continue prédéterminée présente une durée qui n'est pas supérieure à la durée du créneau temporel (60).

10. Système de communication sans fil selon l'une quelconque des revendications 1 à 9, dans lequel :
chacun des deux sous-systèmes ou plus (30) est configuré de manière à mettre en oeuvre une communication sans fil en utilisant l'un quelconque des deux canaux de fréquence ou plus (CH1 à CH3) ; et
le maître (1) est configuré de manière à, au cours du processus de modification, mesurer une intensité de champ radioélectrique pour chacune des deux trames subséquentes ou
plus (52) de la supertrame en cours (40A) sur un canal de fréquence en cours d'utilisation des deux canaux de fréquence ou plus (CH1 à CH3) ;
mesurer des intensités de champ radioélectrique sur des canaux de fréquence restants des deux canaux de fréquence ou plus (CH1 à CH3) pour une trame subséquente (52) dans laquelle l'intensité de champ radioélectrique sur le canal de fréquence en cours d'utilisation est supérieure à un premier seuil prédéterminé ; et
lorsqu'au moins l'une des intensités de champ radioélectrique sur les canaux de fréquence restants est supérieure à un deuxième seuil prédéterminé, exclure, de candidats pour la trame de référence (53), une trame subséquente (52) dans laquelle l'intensité de champ radioélectrique sur le canal de fréquence en cours d'utilisation est supérieure au premier seuil.

11. Système de communication sans fil selon l'une quelconque des revendications 1 à 10, dans lequel :
les deux sous-systèmes ou plus (30) sont configurés de manière à mettre en oeuvre une communication sans fil en utilisant deux canaux de fréquence distincts ou plus (CH1 à CH3) ; et le maître (1) est configuré de manière à, au cours du processus de modification,
mesurer une intensité de champ radioélectrique pour chacune des deux trames subséquentes ou plus (52) de la supertrame en cours (40A) sur un canal de fréquence en cours d'utilisation des deux canaux de fréquence ou plus (CH1 à CH3) ;
mesurer des intensités de champ radioélectrique sur des canaux de fréquence restants des deux canaux de fréquence ou plus (CH1 à CH3) pour une trame subséquente (52) dans laquelle l'intensité de champ radioélectrique sur le canal de fréquence en cours d'utilisation est supérieure à un troisième seuil prédéterminé ;
lorsqu'au moins l'une des intensités de champ radioélectrique sur les canaux de fréquence restants est supérieure à un quatrième seuil prédéterminé, déterminer si une cause pour rendre les intensités de champ radioélectrique supérieures au quatrième seuil prédéterminé concerne un signal sans fil de l'un quelconque des deux sous-systèmes ou plus (30) ; et
lorsque la cause concerne un signal sans fil de l'un quelconque des deux sous-systèmes ou plus (30), exclure, de candidats pour la trame de référence (53), une trame subséquente (52) dans laquelle l'intensité de champ radioélectrique sur le canal de fréquence en cours d'utilisation est supérieure au troisième seuil.

12. Système de communication sans fil selon la revendication 1 ou 2, dans lequel le maître (1) est configuré de manière à :
mettre en oeuvre une mesure d'une intensité de champ radioélectrique pour chacune des deux trames subséquentes ou plus (52) de la supertrame en cours (40A) ;
déterminer la trame de référence (53) sur la base des intensités de champ radioélectrique mesurées ; et
envoyer un signal sans fil représentatif de la trame de référence déterminée (53) aux deux esclaves ou plus (10).

13. Système de communication sans fil selon la revendication 12, dans lequel le maître (1) est configuré de manière à :
mettre en oeuvre la mesure de l'intensité de champ radioélectrique pour chacune des deux trames subséquentes ou plus (52) de la supertrame en cours (40A), deux fois ou plus ; et
déterminer la trame de référence (53) sur la base de résultats des deux mesures ou plus.

14. Système de communication sans fil selon l'une quelconque des revendications 1 à 13, dans lequel
le maître (1) est configuré de manière à exclure, de candidats pour la trame de référence (53), une trame subséquente (52) laquelle correspond à l'une des deux trames subséquentes ou plus (52) de la supertrame en cours (40A), et est adjacente à la trame de tête (51) de la supertrame en cours (40A).
